# EUROPEAN PATENT APPLICATION

(11) **EP 2 626 734 A1**
(43) Date of publication of application: **14.08.2013**
(21) Application number: 12170957.0
(22) Date of filing: 06.06.2012
(51) Int. Cl.: G02B 26/00, G09G 3/34

(54) **Electro-wetting display device**

(30) Priority: 10.02.2012 TW 101104420
(71) Applicant: AU Optronics Corporation, Hsin-Chu 300 (TW)
(72) Inventor: Yang, Syuan-Ling, Hsinchu (TW); Heikenfeld, Jason, Hsinchu (TW)
(74) Representative: Becker Kurig Straus

(57) **Abstract**

An electro-wetting display device including a backlight module, an opposite substrate, a polar fluid and a non-polar fluid is provided. The backlight module is used to provide a light. The opposite substrate is located above the backlight module. The opposite substrate includes an opposite electrode and a first dielectric layer. The first dielectric layer substantially covers the opposite electrode. The polar fluid is located between the backlight module and the opposite substrate. The non-polar fluid is located between the backlight module and the opposite substrate.

## Description

### BACKGROUND OF THE INVENTION

### 1. Field of the Invention

The present invention relates to an electro-wetting display device, and more particularly, to an electro-wetting display device with high transparency.

### 2. Description of Related Art

With the rigorous development of E-paper and E-book in recent years, lighter, thinner and flexible displays will become the main stream in the future. Electro-wetting display device (EWD) devices are a display panel employed in E-paper and E-book.

Currently, based on the illumination principle, the EWD devices can be classified into two types, including shutter type EWD and light wave coupling EWD.

Taking the shutter type EWD as an example, it includes an upper electrode, a lower electrode, and polar fluid and non-polar fluid located between the two electrodes. When no voltage is applied to the upper and lower electrodes, an ink layer (non-polar fluid) is distributed over an entire pixel unit, such that an incident light can be absorbed by the ink layer, causing the pixel unit to present a dark state. On the contrary, when the pixel unit is desired to present a bright state, a voltage is applied to the upper and lower electrodes, causing the ink layer to shrink to an edge of the pixel area so as to expose a reflective layer below the ink layer. As such, the incident light can be reflected by the reflective layer to present the bright state. However, in order to achieve high contrast, the ink layer for shielding light must have a sufficient thickness. As a result, a wall for isolating adjacent ink layers also increases in height, which also increases the difficulties of the fabrication process of the electro-wetting display device.

On the other hand, to display a color image by an EWD device, the light wave coupling EWD is usually used. Specifically, a color dye is generally mixed in the non-polar fluid of the EWD device. When a voltage is applied to the upper and lower electrodes, the non-polar fluid mixed with the color dye is distributed over the entire pixel unit, and the incident light is transmitted through the non-polar fluid mixed with the color dye such that the pixel unit presents a color image. On the contrary, to cause the pixel unit to present a dark state, the upper and lower electrodes are applied with a voltage, causing the non-polar fluid to shrink to an edge of the pixel area. Because the polar fluid has a high refractive index, the incident light experiences a total reflection and cannot emerge via the polar fluid, such that the image presents a dark state. In order to fill the non-polar fluid mixed with various dyes into various pixel units to present various colors, an inkjet printing process is usually used for full color process. However, the inkjet printing process has a disadvantage of poor uniformity, which limits the resolution of the electro-wetting display device. In addition, selection of the material of color dyes is limited by its solubility in the non-polar fluid and, therefore, the brightness and color saturation of the electro-wetting display device are also limited. Therefore, there are several aspects to be made for the development of color EWD device.

In addition, the conventional backlight module, as a light source, usually includes a light guide plate having a light reflecting structure, i.e. its light reflecting surface has a scattering structure such that a light incident on the light reflecting surface is reflected to a light-emitting surface to emit out. As a result, because the scattering structure on the light reflecting surface reflects lights, the EWD device has a poor transparency.

### SUMMARY OF THE INVENTION

Accordingly, the present invention is directed to an electro-wetting display device which has good color saturation and transparency and can be fabricated with a simple fabrication process.

The present invention provides an electro-wetting display device including a backlight module, an opposite substrate, a polar fluid and a non-polar fluid. The backlight module provides a light. The opposite substrate is disposed above the backlight module. The opposite substrate includes an opposite electrode and a first dielectric layer. The first dielectric layer substantially covers the opposite electrode. The polar fluid is located between the backlight module and the opposite substrate. The non-polar fluid is located within the polar fluid.

In one embodiment, the backlight module includes a light guide plate and a light source. The light guide plate includes a light-incident surface and a light-emitting surface. The light source is adjacent the light-incident surface of the light guide plate.

In one embodiment, a wavelength of the light ranges from about 300 nm to about 430 nm.

In one embodiment, the electro-wetting display device further includes an electrode layer located between the backlight module and the polar fluid for providing a voltage to the polar fluid.

In one embodiment, the electro-wetting display device further includes a second dielectric layer located between the polar fluid and the electrode layer.

In one embodiment, the opposite electrode is ring-shape or symmetrical shape.

In one embodiment, the electro-wetting display device further includes a hydrophilic wall located on the first dielectric layer, and the non-polar fluid is located in a space enclosed by the hydrophilic wall.

In one embodiment, the non-polar fluid comprises silicon oil, alkane oil, solvent mixture of silicon oil or solvent mixture of alkane oil

In one embodiment, the first dielectric layer includes silicon nitride, silicon oxinitride or silicon dioxide.

In one embodiment, a surface of the dielectric layer is a hydrophobic surface.

In one embodiment, the opposite substrate further includes an illumination material layer, the illumination material layer includes a fluorescence material or a phosphor material, and the illumination material layer is excited by the light to provide a visible light.

In one embodiment, at least one of the polar fluid, the non-polar fluid, and the opposite electrode is transparent.

In one embodiment, a difference between a refractive index of the polar fluid and a refractive index of the non-polar fluid ranges from about 0.05 to about 1.5.

In one embodiment, the light has an incident angle with respect to the polar fluid, and the incident angle ranges from about 55 degrees to about 75 degrees.

The present invention additionally provides an electro-wetting display device including a backlight module, an opposite electrode, a polar fluid and a non-polar fluid. The backlight module provides a light. The opposite electrode is provided with a first voltage. The polar fluid is located between the backlight module and the opposite electrode. The polar fluid is provided with a second voltage. The non-polar fluid is located within the polar fluid. The non-polar fluid is moved by a voltage difference between the first voltage and the second voltage.

In one embodiment, the electro-wetting display device further includes an electrode layer located between the backlight module and the polar fluid for providing the second voltage to the polar fluid.

In one embodiment, the electro-wetting display device further includes a hydrophilic wall located in the polar fluid, and the non-polar fluid is located in a space enclosed by the hydrophilic wall.

In one embodiment, the non-polar fluid includes silicon oil, alkane oil, solvent mixture of silicon oil or solvent mixture of alkane oil.

In one embodiment, the electro-wetting display device further includes a first dielectric layer substantially covering the opposite electrode. The first dielectric layer includes silicon nitride, silicon oxinitride or silicon dioxide, and a surface of the dielectric layer is a hydrophobic surface.

In one embodiment, the electro-wetting display device further includes an illumination material layer. The illumination material layer includes a fluorescence material or a phosphor material, and the illumination material layer is excited by the light to provide a visible light.

In one embodiment, a difference between a refractive index of the polar fluid and a refractive index of the non-polar fluid ranges from about 0.05 to about 1.5, and the light has an incident angle with respect to the polar fluid, the incident angle ranging from about 55 degrees to about 75 degrees.

In view of the foregoing, when the opposite electrode and the electrode layer of the electro-wetting display device of the present invention are not applied with a voltage, the polar fluid approach the backlight module. The polar fluid has a high refractive index and, therefore, the incident light experiences a total reflection, causing the pixel unit not to emit light. This is a dark state image. When there is a voltage difference between the opposite electrode and electrode layer of the electro-wetting display device of the present invention, the non-polar fluid approach the backlight module. At this time, the incident light can be transmitted through the non-polar fluid to cause the illumination material layer to emit various color lights. This is the bright state image.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

Fig. 1 is a sectional view of an electro-wetting display device in a dark state according to one embodiment of the present invention.

Fig. 2 is a sectional view of the electro-wetting display device in a bright state according to one embodiment of the present invention.

Fig. 3 is a top view of the opposite electrode of the electro-wetting display device according to one embodiment of the present invention.

Fig. 4 is a top view of the opposite electrode of the electro-wetting display device according to another embodiment of the present invention.

Fig. 5 is a top view of the opposite electrode of the electro-wetting display device according to still another embodiment of the present invention.

### DESCRIPTION OF THE EMBODIMENTS

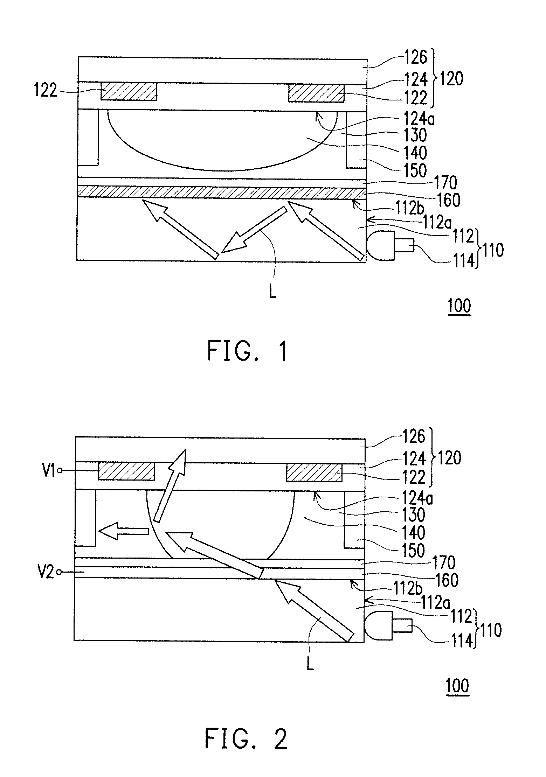

Fig. 1 is a sectional view of an electro-wetting display device in a dark state according to one embodiment of the present invention. Fig. 2 is a sectional view of the electro-wetting display device in a bright state according to the present embodiment. It is noted that Fig. 1 and Fig. 2 illustrate only one pixel unit. However, it is already known that the electro-wetting display device may include a plurality of pixel units, and people skilled in the art can readily understand the structure of the electro-wetting display device 100 upon reading the disclosure of the present embodiment.

Referring to Fig. 1, the electro-wetting display device 100 includes a backlight module 110, an opposite substrate 120, a polar fluid 130 and a non-polar fluid 140. The backlight module 110 is used to provide a light L having a wavelength ranging from about 300 nm to about 430 nm, preferably, a near-ultraviolet wavelength, such as, 405 nm. The opposite substrate 120 is disposed above the backlight module 110. The opposite substrate 120 includes an opposite electrode 122 and a first dielectric layer 124. The first dielectric layer 124 substantially covers the opposite electrode 122. The polar fluid 130 is disposed between the backlight module 110 and the opposite substrate 120, and the non-polar fluid 140 is located within the polar fluid 130 or between the backlight module 110 and the opposite substrate 120.

Referring to Fig. 2, specifically, the electro-wetting display device 100 includes the backlight module 110, the opposite electrode 122, the polar fluid 130 and the non-polar fluid 140. The backlight module 110 provides a light L. The opposite electrode 122 is provided with a first voltage V1. The polar fluid 130 is disposed between the backlight module 110 and the opposite electrode 122, and the polar fluid 130 is provided with a second voltage V2. The non-polar fluid 140 is located within the polar fluid 130 or between the backlight module 110 and the opposite substrate 120, and is moved owing to a voltage difference between the first voltage V1 and the second voltage V2.

As shown in Fig. 1 and Fig. 2, the backlight module 110 includes a light guide plate 112 and a light source 114. The light guide plate 112 includes a light-incident surface 112a and a light-emitting surface 112b. The light source 114 is disposed adjacent the light-incident surface 112a of the light guide plate 112. The light source 114 provides a light L. The light L enters the light guide plate 112 via the light-incident surface 112a, and emits from the light-emitting surface 112b. The light guide plate 112 of the present embodiment is not provided with a structure for scattering the light. In this embodiment, the light source 114 is, for example, an ultraviolet light source or a near-ultraviolet light source. Therefore, the light L emitted by the light source 114 is invisible to human eye when transmitted in the light guide plate 112, thereby increasing the transparency of the backlight module 110.

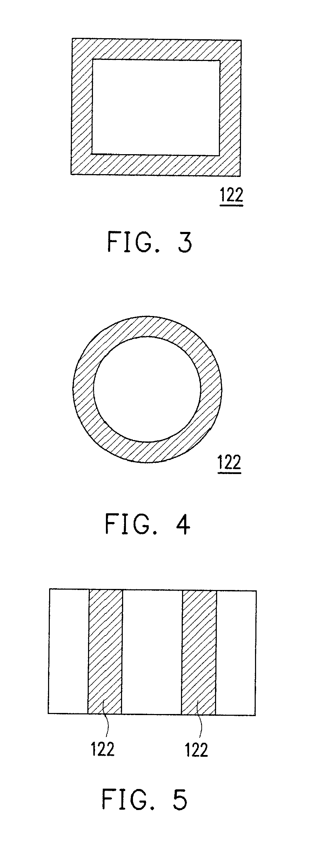

The opposite substrate 120 includes the opposite electrode 122 and the first dielectric layer 124. Fig. 3 is a top view of the opposite electrode of the electro-wetting display device according to one embodiment of the present invention. Referring to Fig. 3, in the present embodiment, the opposite electrode 122 is, for example, a square frame in shape. Fig. 4 is a top view of the opposite electrode of the electro-wetting display device according to another embodiment of the present invention. Referring to Fig. 4, in the present embodiment, the opposite electrode 122 is, for example, a circular ring in shape. When the opposite electrode 122 is ring-shaped, such as, in the shape of the square frame or the circular ring, it facilitates concentrating the non-polar fluid within the range enclosed by the opposite electrode 122 and thus facilitates concentrating the emitting light L. However, the opposite electrode 122 is not intended to be limited to any particular shape. In addition, the opposite electrode 122 may also have a symmetrical shape as shown in Fig. 5.

The first dielectric layer 124 covers the opposite electrode 122 to avoid short circuit due to a direct contact between the polar fluid 130 and the opposite electrode 122. A material of the first dielectric layer 124 is, for example, silicon nitride, silicon oxinitride or silicon dioxide, and a surface 124a of the first dielectric layer 124 may be a hydrophobic surface.

The opposite substrate 120 further includes an illumination material layer 126. A material of the illumination layer 126 is, for example, a fluorescence material or a phosphor material. The illumination material layer 126 may be excited by the light L to provide a visible light. In addition, the material of the illumination material layer 126 may be selected to emit lights of various colors depending upon actual requirements.

The electro-wetting display device 100 of the present embodiment further includes a hydrophilic wall 150. The hydrophilic wall 150 is disposed on the first dielectric layer 124, and the non-polar fluid 140 is located in a space enclosed by the hydrophilic wall 150. Specifically, because the surface 124a of the first dielectric layer 124 is a hydrophobic surface, the non-polar fluid 140 tends to adhere to the surface 124a of the first dielectric layer 124. In addition, because the hydrophilic wall 150 has the hydrophilic nature, non-aqueous non-polar fluids 140 belonging to different pixel units can be isolated.

A material of the polar fluid 130 has polarity and flowability. Preferably, the polar fluid 130 is transparent. The material of the polar fluid 130 is, for example, water or another transparent fluid with polarity. The polar fluid 130 is located between the backlight module 110 and the opposite electrode 122. In addition, the polar fluid 130 has a first refractive index.

A material of the non-polar fluid 140 has non-polarity nature and flowability. Preferably, the non-polar fluid 140 is transparent. The material of the non-polarity fluid 140 is, for example, silicon oil, alkane oil, solvent mixture of silicon oil or solvent mixture of alkane oil. In addition, the non-polar fluid 140 has a second refractive index. The first refractive index of the polar fluid 130 and the second refractive index of the non-polar fluid 140 may be selected so that a difference between the first refractive index and the second refractive index ranges from 0.05 to 1.5 and the first refractive index is greater than the second refractive index.

Notably, at least one of the opposite electrode 122, the polar fluid 130 and the non-polar fluid 140 is a transparent material. As such, the transparency of the electro-wetting display device 100 can be increased and the electro-wetting display device 100 can thus be used as a transparent display.

In addition, the electro-wetting display device 100 of the present embodiment further includes an electrode layer 160. The electrode layer 160 is disposed between the backlight module 110 and the polar fluid 130, which can provide the second voltage V2 to the polar fluid 130.

Besides, the electro-wetting display device 100 further includes a second dielectric layer 170. The second dielectric layer 170 covers the electrode layer 160, and the second dielectric layer 170 is disposed between the polar fluid 130 and the electrode layer 160 to prevent short circuit due to a direct contact between the polar fluid 130 and the electrode layer 160.

Specifically, the electro-wetting display device 100 includes the light guide plate 112, the light source 114, the electrode layer 160, the opposite substrate 120, the first dielectric layer 124, the polar fluid 130, and the non-polar fluid 140. The light guide plate 112 includes the light-incident surface 112a and the light-emitting surface 112b. The light source 114 is disposed adjacent the light-incident surface 112a of the light guide plate 112. The electrode layer 160 is disposed on the light-emitting surface 112b of the light guide plate 112. The opposite substrate 120 includes the opposite electrode 122, the first dielectric layer 124 and the illumination material layer 126. The opposite electrode 122 is disposed on the illumination material layer 126, and the first dielectric layer 124 covers the opposite electrode 122. The polar fluid 130 is disposed between the electrode layer 160 and the first dielectric layer 124. The non-polar fluid 140 is located on the first dielectric layer 124.

Referring again to Fig. 1, the opposite electrode 122 and the electrode layer 160 of the electro-wetting display device 100 are not applied with a voltage in this state. Therefore, the non-polar fluid 140 adheres to the surface 124a of the first dielectric layer 124 and does not contact the second dielectric layer 170, and the polar fluid 130 covers the entire second dielectric layer 170. When the light source 114 provides a light L into the light guide plate 112 and the light L is transmitted from the light guide plate 112 to the polar fluid 130, because the first refractive index of the polar fluid 130 is far higher than the refractive index of the light guide plate 112 and the light L has an incident angle with respect to the polar fluid 130, the light L experiences a total reflection and is reflected back into the light guide plate 112 without being transmitted to the illumination material layer 126. The illumination material layer 126 is not excited by the light L and, therefore, the electro-wetting display device 100 does not emit light. This is the dark state display mode of the electro-wetting display device 100. In order to achieve the total reflection, the incident angle may range from about 55 degrees to about 75 degrees.

In the present embodiment, the dark state display mode of the electro-wetting display device 100 utilizes the total reflection phenomenon of the light to prevent the light L from passing through the polar fluid 130 to emit out of the electro-wetting display device 100. Therefore, the electro-wetting display device 100 can present a dark state image without using an ink layer to shield the light. In other words, the dark state display mode of the electro-wetting display device 100 does not utilize the light shield principle. As such, it is not necessary to consider the solubility of the ink in the non-polar fluid 140. Therefore, this can reduce the usage of the non-polar fluid 140, and also increase the contrast of dark stage image without increasing the thickness of the non-polar fluid 140.

Referring to Fig. 2, the opposite electrode 122 of the electro-wetting display device 100 is applied with the first voltage V1, and the electrode layer 160 is applied with the second voltage V2, wherein the first voltage V1 is different from the second voltage, i.e. there is a voltage difference between the first voltage V1 and the second voltage V2. As a result, the non-polar fluid 140 moves away from the area corresponding to the electrode 122 and hence shrinks within an area enclosed by the opposite electrode 122. As such, the contact area between the non-polar fluid 140 and the first dielectric layer 124 is reduced. Because the total volume of the non-polar fluid 140 remains unchanged, the non-polar fluid 140 increases in thickness and thereby contacts the second dielectric layer 170. In this case, when the light L enters from the backlight module 110 into the non-polar fluid 140, because the second refractive index of the non-polar fluid 140 is substantially the same as that of the second dielectric layer 170, the light L can refract into the non-polar fluid 140 and can be transmitted through the non-polar fluid 140 to the illumination material layer 126. In particular, the refractive index of the non-polar fluid 140 and the polar fluid 130 differ greatly. Therefore, when the light L is transmitted in the non-polar fluid 140, a majority of the light L is reflected into the illumination material layer 126, such that the illumination material layer 126 is excited by the light L. This is the bright state display mode of the electro-wetting display device mode 100.

In the bright state display mode of the electro-wetting display device 100 of the present embodiment, the light L is transmitted to the illumination material layer 126 through the non-polar fluid 140, causing the illumination material layer 126 to be light-excited to emit various color lights. In particular, in the electro-wetting display device 100, the solid illumination material layer 126 is disposed on the opposite substrate 120 and, therefore, the electro-wetting display device 100 does not need to add a color dye into the non-polar fluid 140, such that the color performance of the electro-wetting display device 100 is no longer limited by the solubility of the color dye in the non-polar fluid 140. Therefore, the electro-wetting display device 100 can have good color saturation. On the other hand, because the solid illumination material layer 126 can be easily integrated into the existing fabrication process, the electro-wetting display device 100 of the present embodiment can be fabricated with a simple fabrication process.

In addition, the light source of the electro-wetting display device 100 of the present embodiment is, for example, an ultraviolet light source or a near-ultraviolet light source. When the ultraviolet light is transmitted in the backlight module 110, polar fluid 130 and non-polar fluid 140, the ultraviolet light is not visible to the human eye. A visible light is emitted only when the ultraviolet light excites the illumination material layer 126. In addition, the light guide plate 112 of the backlight module 110 of the present embodiment does not have a structure for scattering the light and, therefore, the transparency of the electro-wetting display device 100 can be improved.

In summary, when the opposite electrode and the electrode layer of the electro-wetting display device of the present application are not applied with a voltage, the polar fluid contacts the second dielectric layer. The polar fluid has a high refractive index and the incident light has a specific incident angle with respect to the polar fluid. Therefore, the incident light experiences a total reflection, causing the electro-wetting display device to display a dark stage image and to have good contrast.

When the opposite electrode and electrode layer of the electro-wetting display device of the present application are applied with voltage, the non-polar fluid shrinks within the area enclosed by the opposite electrode and contacts the backlight module. At this time, the incident light can be refracted into the non-polar fluid and excite the illumination material layer to emit various color lights. This is the bright stage image. Because the electro-wetting display device of the present invention utilizes the solid illumination material, its color saturation is not limited by the solubility of the dye in the non-polar fluid. Therefore, the electro-wetting display device of the present application can have a good color performance.

In addition, the electro-wetting display device of the present application has good transparency and hence can be applied in various transparent displays. Therefore, the electro-wetting display device of the present application has good designability and applicability.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An electro-wetting display device (100) comprising:
a backlight module (110) for providing a light (L);
an opposite substrate (120) disposed above the backlight module (110), the opposite substrate (120) comprising:
an opposite electrode (122); and
a first dielectric layer (124) substantially covering the opposite electrode (122);
a polar fluid (130) located between the backlight module (110) and the opposite substrate (120); and
a non-polar fluid (140) located between the backlight module (110) and the opposite substrate (120).

2. The electro-wetting display device (100) according to claim 1, wherein the backlight module (110) comprises:
a light guide plate (112) having a light-incident surface (112a) and a light-emitting surface (112b); and
a light source (114) adjacent to the light-incident surface (112a) of the light guide plate (112) , wherein a wavelength of the light (L) ranges from about 300 nm to about 430 nm.

3. The electro-wetting display device (100) according to claim 1, further comprising an electrode layer (160) located between the backlight module (110) and the polar fluid (130) for providing a voltage to the polar fluid (130).

4. The electro-wetting display device (100) according to claim 4, further comprising a second dielectric layer (170) located between the polar fluid (130) and the electrode layer (160).

5. The electro-wetting display device (100) according to claim 1, wherein the opposite electrode (122) is ring-shape or symmetrical shape, wherein the non-polar fluid (140) comprises silicon oil, alkane oil, solvent mixture of silicon oil or solvent mixture of alkane oil, and wherein the first dielectric layer (124) comprises silicon nitride, silicon oxinitride or silicon dioxide.

6. The electro-wetting display device (100) according to claim 1, further comprising a hydrophilic wall (150) located on the first dielectric layer (124), and the non-polar fluid (140) is located in a space enclosed by the hydrophilic wall (150).

7. The electro-wetting display device (100) according to claim 1, wherein a surface of the first dielectric layer (124) is a hydrophobic surface.

8. The electro-wetting display device (100) according to claim 1, wherein the opposite substrate (120) further comprises an illumination material layer (126), the illumination material layer (126) comprises a fluorescence material or a phosphor material, and the illumination material layer (126) is excited by the light (L) to provide a visible light.

9. The electro-wetting display device (100) according to claim 1, wherein at least one of the polar fluid (130), the non-polar fluid (140), and the opposite electrode (122) is transparent, wherein a difference between a refractive index of the polar fluid (130) and a refractive index of the non-polar fluid (140) ranges from about 0.05 to about 1.5, and wherein the light (L) has an incident angle with respect to the polar fluid (130), the incident angle ranging from about 55 degrees to about 75 degrees.

10. An electro-wetting display device (100) comprising:
a backlight module (110) for providing a light (L);
an opposite electrode (122) being provided with a first voltage (V1);
a polar fluid (130) located between the backlight module (110) and the opposite electrode (122), wherein the polar fluid (130) is provided with a second voltage (V2); and
a non-polar fluid (140) located between the backlight module (110) and the opposite electrode (122), wherein the non-polar fluid (140) is moved by a voltage difference between the first voltage (V1) and the second voltage (V2).

11. The electro-wetting display device (100) according to claim 10, further comprising an electrode layer (160) located between the backlight module (110) and the polar fluid (130) for providing the second voltage (V2) to the polar fluid (130).

12. The electro-wetting display device (100) according to claim 10, further comprising a hydrophilic wall (150) located in the polar fluid (130), and the non-polar fluid (140) is located in a space enclosed by the hydrophilic wall (150).

13. The electro-wetting display device (100) according to claim 10, wherein the non-polar fluid (140) comprises silicon oil, alkane oil, solvent mixture of silicon oil or solvent mixture of alkane oil and wherein a difference between a refractive index of the polar fluid (130) and a refractive index of the non-polar fluid (140) ranges from about 0.05 to about 1.5, and the light (L) has an incident angle with respect to the polar fluid (130), the incident angle ranging from about 55 degrees to about 75 degrees.

14. The electro-wetting display device (100) according to claim 10, further comprising a first dielectric layer (124) substantially covering the opposite electrode (122), wherein the first dielectric layer (124) comprises silicon nitride, silicon oxinitride or silicon dioxide, and a surface of the dielectric layer is a hydrophobic surface.

15. The electro-wetting display device (100) according to claim 10, further comprising an illumination material layer (126), wherein the illumination material layer (126) comprises a fluorescence material or a phosphor material, and the illumination material layer (126) is excited by the light (L) to provide a visible light.
